Europäisches Patentamt

European Patent Office

Office européen des brevets

(11) Veröffentlichungsnummer: **0 226 725 B1**

# EUROPÄISCHE PATENTSCHRIFT

(45) Veröffentlichungstag der Patentschrift: **12.06.91**

(51) Int. Cl.⁵: **G05F 1/571**

(21) Anmeldenummer: **86113220.7**

(22) Anmeldetag: **25.09.86**

(54) **Stabilisierungsschaltung für einen Mikrocomputer.**

(30) Priorität: **13.11.85 DE 3540209**

(43) Veröffentlichungstag der Anmeldung:
**01.07.87 Patentblatt 87/27**

(45) Bekanntmachung des Hinweises auf die
Patenterteilung:
**12.06.91 Patentblatt 91/24**

(84) Benannte Vertragsstaaten:
**DE FR GB IT**

(56) Entgegenhaltungen:
**DE-A- 2 813 402**
**US-A- 3 588 675**

**PATENTS ABSTRACTS OF JAPAN, Band 7,
Nr. 256 (P-236)[1401], 15. November 1983; &
JP-A-58 140 826 (MATSUSHITA DENKI SAN-
GYO K.K.) 20-08-1983**

(73) Patentinhaber: **AKO-Werke GmbH & Co
Pfannerstrasse 75/79
W-7988 Wangen/Allgäu(DE)**

(72) Erfinder: **Schotten, Henno, Dipl.-Ing.
Schulstrasse 241
W-7989 Argenbühl-Ratzenried(DE)**

(74) Vertreter: **Gaiser, Hartmut, Dipl.-Ing.
Sulzbacher Strasse 39
W-8500 Nürnberg 20(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Stabilisierungsschaltung für die Versorgungsspannung eines Ein-Chip-Mikrocomputers mit den Merkmalen des Oberbegriffs des Anspruchs 1.

Eine derartige Stabilisierungsschaltung ist in der DE 28 13 402 A1 beschrieben. Dort sind der zweite und dritte Schalttransistor zur Stromverstärkung hintereinandergeschaltet. Der erste Schalttransistor wird nicht Schlagartig von seinem sperrenden Zustand in seinen leitenden Zustand und umgekehrt umgeschaltet.

Bei preiswerten, kleinen Ein-Chip-Mikrocomputern sind die Signalausgänge nur definiert, wenn die Versorgungsspannung in einem zulässigen Arbeitsbereich, beispielsweise 5 V ± 0,5 V liegt. Dies gilt auch während des Anliegens eines Reset-Signals. Wird zum Einschalten des Mikrocomputers die Versorgungsspannungsquelle eingeschaltet, dann muß sich zunächst der Kondensator aufladen. Die Kondensatorspannung steigt entsprechend der Zeitkonstante langsam von 0 V auf beispielweise über 5 V. Während einer gewissen Anfangszeit liegt also die Spannung unterhalb der Soll-Versorgungsspannung. Legt man diese Spannung über eine übliche Stabilisierungsschaltung an den Versorgungsspannungseingang des Mikrocomputers, dann steigt auch die dort sich einstellende Spannung entsprechend der Kondensatorspannung. Am Versorgungsspannungseingang liegt also in der Anfangszeit eine unzulässige niedrige Spannung. Dies hat zur Folge, daß in der Anfangszeit die Ausgangssignale des Mikrocomputers nicht definiert sind. Dies kann zu einer unkontrollierten Ansteuerung von Verbrauchern führen.

In der US-A-3 588 675 ist eine Konstantspannungsschaltung beschrieben. Bei dieser ist an die Basis des Längstransistors keine Zenerdiode angeschlossen. Ein Abschalten des Längstransistors erfolgt, wenn eine Sollspannung unterschritten wird.

In der JP-A-58 140 826 ist eine Schaltung beschrieben, die bei einer zu hohen und bei einer zu niedrigen Eingangspannung die Spannungsversorgung unterbricht.

Aufgabe der Erfindung ist es, eine Stabilisierungsschaltung der eingangs genannten Art vorzuschlagen, die die Versorgungsspannung erst dann schlagartig auf den Mikrocomputer durchschaltet, wenn diese im zulässigen Arbeitsbereich liegt und die die Versorgungsspannung vom Mikrocomputer auch definiert abschaltet.

Erfindungsgemäß ist obige Aufgabe bei einer Schaltung der eingangs genannten Art durch die Merkmale des kennzeichnenden Teils des Anspruchs 1 gelöst.

Durch die erfindungsgemäße Schaltung ist eine durch das erste Schwellwertbauteil definierte Spannungszuschaltung zum Mikrocomputer und eine durch die zweite Zenerdiode definierte Spannungsabschaltung gewährleistet. Günstig ist dabei außerdem, daß die zweite Zenerdiode zugleich im Arbeitsbereich der Versorgungsspannung die an sich bekannte Spannungsstabilisierung durchführt.

Die Schaltung läßt sich mit einer geringen Anzahl von Bauelementen aufbauen. Sie läßt sich überwiegend auch auf dem Kristall des Mikrocomputers integrieren.

Vorteilhafte Ausgestaltungen der Erfindung ergeben sich aus den Unteransprüchen und der folgenden Beschreibung. In der Zeichnung zeigen:

Figur 1    ein Schaltbild einer Stabilisierungsschaltung,

Figur 2    ein Spannungsdiagramm und

Figur 3    ein weiteres Ausführungsbeispiel einer Stabilisierungsschaltung.

An ein Netzteil, bestehend aus einem Gleichrichter GR und einem Kondensator C, liegt die Spannung U1 an. An den Kondensator C ist eine Speiseleitung L angeschlossen. In diese ist die Kollektor-Emitterstrecke eines ersten Schalttransistors T1 geschaltet. Dessen Emitter bildet den Ausgang der Stabilisierungsschaltung. An ihm steht die Spannung U2 an. Mit dem Ausgang ist der Versorgungsspannungseingang des nicht näher dargestellten Mikrocomputers zu verbinden.

Am Kollektor des Transistors T1 liegt eine erste Zenerdiode Z1. An die Basis des Transistors T1 ist eine zweite Zenerdiode Z2 angeschlossen. Die Zenerspannung der Zenerdiode Z2 ist niedriger als die Zenerspannung der Zenerdiode Z1. Diese Spannungsdifferenz beträgt beispielsweise 2 V.

Die Stabilisierungsschaltung weist eine Steuerschaltung S zum Schalten des ersten Schalttransistors T1 auf. In der Steuerschaltung S ist ein zweiter Schalttransistor T2 vorgesehen, dessen Basis-Emitterstrecke in Reihe zu einem Widerstand R1 zwischen einer Bezugsleitung B und der Speiseleitung L liegt. An die Basis des zweiten Schalttransistors T2 ist ein Widerstand R2 angeschlossen, der mit der Speiseleitung L verbunden ist. Parallel zur Emitter-Basisstrecke des Transistors T2 ist die Emitter-Kollektorstrecke eines dritten Schalttransistors T3 geschaltet. Die Basis des Transistors T3 liegt über einen Widerstand R3 an der Zenerdiode Z1 und einem Punkt zwischen der Zenerdiode Z2 und einem mit dieser in Reihe geschalteten Widerstand R4, der an die Bezugsleitung B angeschlossen ist. Der Kollektor des zweiten Schalttransistors T2 ist mit der Basis des Transistors T1 verbunden.

Die Schaltung kann aus diskreten Bauelementen aufgebaut werden. Insbesondere eignet sich jedoch die Schaltung der Widerstände R1, R2, R3 und R4, der Zenerdioden Z1 und Z2 und der Schalttransistoren T2 und T3 zur Integration auf dem Mikrocomputer.

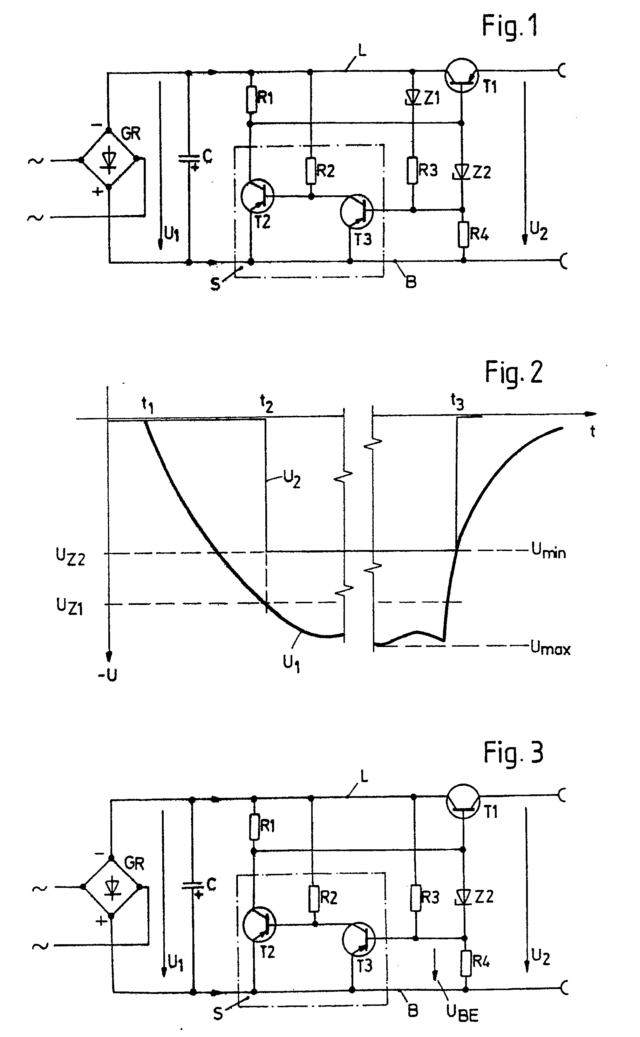

Die Funktionsweise der beschriebenen Schaltung ist etwa folgende: Wird zum Zeitpunkt t1 das Netzteil mittels eines nicht näher dargestellten Schalters eingeschaltet, dann steigt die Spannung am Kondensator C langsam an (vgl. Figur 2) - hier in negativer Richtung - .

Sobald die Spannung U1 die Schwellspannung zwischen Emitter und Basis des Transistors T2 erreicht hat, wird dieser über den Widerstand R2 leitend. Dadurch bleibt das Potential am Kollektor des Transistors T2 und damit auch an der Basis des Transistors T1 auf dem Potential der Bezugsleitung B. Der erste Schalttransistor T1 wird also gesperrt gehalten. Die Spannung U2 ist 0 V. Dieser erste Schaltzustand bleibt stabil, bis die Spannung U1 soweit angestiegen ist, daß die Zenerspannung UZ1 der Zenerdiode Z1 erreicht ist. Es beginnt jetzt ein Strom über den Widerstand R3 in die Basis des Transistors T3 zu fließen. Dieser wird also leitend, wodurch der Transistor T2 zu sperren beginnt. Über die Rückkopplung vom Kollektor des Transistors T2 über die Zenerdiode Z2 auf die Basis des Transistors T3 wird dieser Vorgang verstärkt, so daß der Transistor T3 schlagartig leitend und der Transistor T2 schlagartig gesperrt wird. Dieser Zeitpunkt ist in Figur 2 mit t2 bezeichnet. Beim Sperren des Transistors T2 springt die Spannung an der Basis des Transistors T1 von 0 V auf die Zenerspannung UZ2 der Zenerdiode Z2 zuzüglich der Emitter-Basis-Durchlaßspannung des Transistors T3. Der Transistor T1 ist durchgeschaltet und an dem Ausgang liegt die Spannung U2 im Arbeitsbereich zwischen Umax und Umin (vgl. Figur 2). Die Versorgungsspannung wird also erst auf den Mikroprozessor durchgeschaltet, wenn sie im zulässigen Arbeitsbereich liegt.

Solange die Spannung U2 im zulässigen Arbeitsbereich liegt, führt die Zenerdiode Z2 zu einer Stabilisierung der Spannung U2 gegenüber der Spannung U1.

Wenn die Spannung U1 unter die Zenerspannung UZ2 der Zenerdiode Z2 sinkt, was in Figur 2 zum Zeitpunkt t3 dargestellt ist, kann der Transistor T3 nicht mehr stromführen gehalten werden. Wegen der Rückkopplung der Basis des Transistors T3 über die Zenerdiode Z2 auf den Kollektor des Transistors T2, kippt die Steuerschaltung S schlagartig in ihren ersten Schaltzustand zurück. Der Transistor T2 ist leitend und der Transistor T3 ist gesperrt. Dadurch wird die Spannung U2 schlagartig abgeschaltet.

Die Differenz zwischen den Zenerspannungen UZ1 und UZ2 führt zu einer gewünschten Schalthysterese der Schaltung. Diese gewährleistet auch, daß im Übergangsbereich infolge des Brumms auf dem Kondensator C nicht ständig hin- und hergeschaltet wird. Die Schaltung ist unempfindlich gegen Bauteiltoleranzen, da die Abschaltschwelle durch die Zenerdiode Z2, die auch der Spannungsstabilisierung dient, selbst definiert ist.

Beim Ausführungsbeispiel nach Figur 3 ist die Stabilisierungsschaltung ohne die Zenerdiode Z1 aufgebaut. Für den Wert der Spannung U1 zum Zeitpunkt t2 der Spannungszuschaltung (vgl. Figur 2) ist hier die Basis-Emitter-Schwellspannung $U_{BE}$ des Transistors T3 ausschlaggebend. Die Spannung U2 wird eingeschaltet, sobald die Spannung am Widerstand R4, der mit dem Widerstand R3 einen Spannungteiler bildet, die Basis-Emitter-Schwellspannung $U_{BE}$ des Transistors T3 übersteigt. Bei dieser vereinfachten Ausführung ist eine gewisse Temperaturabhängigkeit in Kauf genommen, die auf der Temperaturabhängigkeit der Basis-Emitter-Schwellspannung $U_{BE}$ des Transistors T3 beruht.

## Ansprüche

1. Stabilisierungsschaltung zur Erzeugung einer Versorgungsspannung (U2) für einen Ein-Chip-Mikrocomputer, bei der zwischen einer Versorgungsspannungsquelle (∿) und einem Versorgungsspannungseingang des Mikrocomputers an einer Speiseleitung (L) ein einem Gleichrichter (GR) nachgeschalteter Kondensator (C) liegt, wobei der Mikrocomputer nur in einem bestimmten Arbeitsbereich der Versorgungsspannung definiert arbeitet und der Kondensator (C) sich beim Einschalten der Versorgungsspannungsquelle (∿) nach einer Zeitkonstanten lädt, bei in der Speiseleitung(L) die Kollektor-Emitterstrecke eines ersten Schalttransistors(T1) liegt, bei der zwischen dem Kondensator(C) und der Kollektor-Emitterstrecke des ersten Schalttransistors (T1) ein erstes Schwellwertbauteil ($Z1;U_{BE}$,R3,R4) an der Speiseleitung(L) liegt, bei der an die Basis des ersten Schalttransistors(T1) eine Zenerdiode(Z2) angeschlossen ist, wobei die Zenerspannung der Zenerdiode(Z2) kleiner als die Schwellwertspannung des Schwellwertbauteils($Z1;U_{BE}$,R3,R4) ist, bei der an die Basis des ersten Schalttransistors(T1) eine einen zweiten Schalttransistor(T2) und einen dritten Schalttransistor(T3) aufweisende Steuerschaltung(S) angeschlossen ist, die in ihrem ersten Schaltzustand den ersten Schalttransistor (T1) gesperrt hält, solange an der Speiseleitung(L) die Schwellwertspannung des ersten Schwellwertbauteils ($Z1;U_{BE}$,R3,R4) noch nicht erreicht ist, bei der die Steuerschaltung(S) beim Erreichen der Schwellwertspannung des ersten Schwellwertbauteils (Z1;U$_{BE}$,R3,R4) an der Speiseleitung(L) in ihren zweiten Schaltzustand übergeht, in dem der erste Schalttransistor(T1) durchgeschaltet ist, und bei der die Steuerschaltung(S) in ihren ersten Schaltzustand zurückgeht, wenn die Spannung an der Speiseleitung(L) die Zenerspannung der Zenerdiode (Z2) unterschreitet, dadurch gekennzeichnet, daß der Kollektor des zweiten Schalttransistors(T2) über die Zenerdiode(Z2) auf die Basis des dritten Schalttransistors(T3) rückgekoppelt ist, so daß der zweite und der dritte Schalttransistor (T2,T3) wechselweise praktisch schlagartig von ihrem einen Schaltzustand in ihren anderen Schaltzustand schalten.

2. Stabilsierungsschaltung nach Anspruch 1, dadurch gekennzeichnet, daß die Steuerschaltung(S) zu Beginn der Ladung des Kondensators(C) in ihren ersten Schaltzustand geschaltet wird.

3. Stabilisierungsschaltung nach Anspruch 1 oder 2, dadurch gekennzeichnet, daß die Basis des zweiten Schalttransistors(T2) über einen Widerstand(R2) an der Speiseleitung(L) liegt.

4. Stabilisierungsschaltung nach einem der vorhergehenden Ansprüche, dadurch gekennzeichnet, daß der Kollektor des zweiten Schalttransistors(T2) an der Basis des ersten Schalttransistors(T1) liegt.

5. Stabilisierungsschaltung nach einem der vorhergehenden Ansprüche, dadurch gekennzeichnet, daß das erste Schwellwertbauteil von einer weiteren Zenerdiode(Z1) gebildet ist, deren Zenerspannung(UZ1) größer als die Zenerspannung (UZ2) der anderen Zenerdiode(Z2) ist.

6. Stabilisierungsschaltung nach Anspruch 5, dadurch gekennzeichnet, daß an die Basis des dritten Schalttransistors(T3) über einen Widerstand(R3) die weitere Zenerdiode(Z1) angeschlossen ist.

7. Stabilisierungsschaltung nach einem der vorhergehenden Ansprüchen dadurch gekennzeichnet, daß parallel zur Basis-Emitterstrecke des dritten Schalttransistors(T3) ein Widerstand(R4) liegt, an den auch die andere Zenerdiode(Z2) und über den Widerstand(R3) die weitere Zenerdiode(Z1) angeschlossen ist.

8. Stabilisierungsschaltung nach einem der vorhergehenden Ansprüche 1 bis 4, dadurch gekennzeichnet, daß die Basis des dritten Schalttransistors(T3) über einen Widerstand (R3) an der Speiseleitung(L) liegt und die Basis-Emitterstrecke des dritten Schalttransistors(T3) die erste Schwellwertspannung(U$_{BE}$) bildet.

## Claims

1. Stabilizer circuit for generating a supply voltage (U$_2$) for a single-chip microcomputer, wherein a condenser (C) connected in series to a rectifier (GR) follows a supply line (L) between a supply voltage source ( ) and a supply voltage input of the microcomputer, in which case the microcomputer only operates defined in a certain operating range of the supply voltage and the condenser (C) is charged when the supply voltage source ( ) is switched on according to a time constant, wherein the collector-emitter section of a first switching transistor (T1) lies in the supply line (L), wherein a first threshold value component (Z1; U$_{BE}$, R3, R4) follows the supply line (L) between the condenser (C) and the collector-emitter section of the first switching transistor (T1), wherein a Zener diode (Z2) is connected to the base of the first switching transistor (T1), the Zener voltage of the Zener diode (Z2) being smaller than the threshold voltage of the threshold voltage component (Z1; U$_{BE}$, R3, R4), wherein a control circuit (S) having a second switching transistor (T2) and a third switching transistor (T3) is connected to the base of the first switching transistor (T1) and holds the first switching transistor (T1) in its first switching position as long as the threshold voltage of the first threshold voltage component (Z1; U$_{BE}$, R3, R4) has not been reached at the first supply line (L), wherein, when the threshold voltage of the first threshold voltage component (Z1; U$_{BE}$, R3, R4) is reached at the supply line (L) the control circuit (S) changes into its second switching position, in which the first switching transistor (T1) is connected through, and wherein the control circuit (S) goes back into its first switching position when the voltage at the supply line (L) goes below the Zener voltage of the Zener diode (Z2), characterised in that the collector of the second switching transistor (T2) is fed back to the base of the third switching transistor (T3) via the Zener diode (Z2), so that the second and third switching transistors (T2, T3) alternately switch virtually abruptly from their one switching position into their other switching position.

2. Stabilizer circuit according to claim 1, characterised in that the control circuit (S) is switched into its first switching position at the start of charging of the condenser (C).

3. Stabilizer circuit according to claim 1 or 2, characterised in that the base of the second switching transistor (T2) follows the supply line (L) via a resistor (R2).

4. Stabilizer circuit according to one of the preceding claims, characterised in that the collector of the second switching transistor (T2) follows the base of the first switching transistor (T1).

5. Stabilizer circuit according to one of the preceding claims, characterised in that the first threshold voltage component is formed by a further Zener diode (Z1), whose Zener voltage (UZ1) is greater than the Zener voltage (UZ2) of the other Zener diode (Z2).

6. Stabilizer circuit according to claim 5, characterised in that the further Zener diode (Z1) is connected to the base of the third switching transistor (T3) via a resistor (R3).

7. Stabilizer circuit according to one of the preceding claims, characterised in that a resistor (R4), to which the other Zener diode (Z2) is connected, as well as the further Zener diode (Z1) via the resistor (R3), follows parallel to the base-emitter section of the third switching transistor (T3).

8. Stabilizer circuit according to one of the preceding claims 1 to 4, characterised in that the base of the third switching transistor (T3) follows the supply line (L) via a resistor (R3) and the base-emitter section of the third switching transistor (T3) forms the first threshold voltage ($U_{BE}$).

## Revendications

1. Un circuit de stabilisation pour produire une tension d'alimentation (U2) pour un micro-ordinateur sur une pastille, circuit dans lequel entre une source de tension d'alimentation (∿) et une entrée de tension d'alimentation du micro-ordinateur, sur un conducteur d'alimentation (L), se trouve un condensateur (C) intercalé à la suite d'un redresseur (GR), cependant que le micro-ordinateur ne fonctionne de façon définie que dans un rayon d'action déterminé de la tension d'alimentation et que le condensateur (C) se charge, lors de la connexion de la source de tension d'alimentation (∿) selon une constante de temps, circuit dans lequel, dans le conducteur d'alimentation (L), est située la ligne émettrice du collecteur d'un premier transistor de commutation (T1), dans lequel se trouve, entre le condensateur (C) et la ligne émettrice du collecteur du premier transistor de commutation (T1), sur le conducteur d'alimentation (L), un premier composant de valeur seuil (Z1;$U_{BE}$,R3,R4), dans lequel une diode Zener (Z2) est reliée à la base du premier transistor de commutation (T1), cependant que la tension Zener de la diode Zener (Z2) est inférieure à la tension de valeur seuil du composant de valeur seuil (Z1;$U_{BE}$,R3,R4), circuit dans lequel un circuit de commande (S) présentant un deuxième transistor de commutation (T2) et un troisième transistor de commutation (T3) est relié à la base du premier transistor de commutation (T1), circuit qui maintient le premier transistor de commutation (T1) bloqué dans son premier état de commutation tant que la tension de valeur seuil du premier composant de valeur seuil (Z1;$U_{BE}$,R3,R4) n'est pas atteinte dans le conducteur d'alimentation (L), circuit dans lequel le circuit de commande (S), en atteignant la tension de valeur seuil du premier composant de valeur seuil (Z1;$U_{BE}$,R3,R4) dans le conducteur d'alimentation (L), passe à son deuxième état de commutation, dans lequel le premier transistor de commutation (T1) est connecté, et circuit dans lequel le circuit de commande (S) revient à son premier état de commutation, lorsque la tension du premier conducteur d'alimentation (L) reste inférieure à la tension Zener de la diode Zener (Z2), caractérisé par le fait que le collecteur du second transistor de commutation (T2) exerce, par l'intermédiaire de la diode Zener (Z2), une rétroaction sur la base du troisième transistor de commutation (T3), de sorte que les second et troisième transistors de commutation (T2, T3) passent réciproquement et pratiquement brusquement d'un état de commutation à l'autre.

2. Circuit de stabilisation selon la revendication 1, caractérisé par le fait que le circuit de commande (S) est commuté dans son premier état de commutation au début du chargement du condensateur (C).

3. Circuit de stabilisation selon la revendication 1 ou 2, caractérisé par le fait que la base du deuxième transistor de commutation (T2) est reliée par l'intermédiaire d'une résistance R2 au conducteur d'alimentation (L).

4. Circuit de stabilisation selon l'une des revendications précédentes, caractérisé par le fait que le collecteur du second transistor de commutation (T2) est situé à la base du premier transistor de commutation (T1).

5. Circuit de stabilisation selon l'une des revendications précédentes, caractérisé par le fait que le premier composant de valeur seuil est constitué par une diode Zener (Z1) supplémentaire dont la tension Zener (UZ1) est supérieure à la tension Zener (UZ2) de l'autre diode Zener (Z2).

6. Circuit de stabilisation selon la revendication 5, caractérisé par le fait que la diode Zener (Z1) supplémentaire est reliée à la base du troisième transistor de commutation (T3) par l'intermédiaire d'une résistance (R3).

7. Circuit de stabilisation selon l'une des revendications précédentes, caractérisé par le fait qu'une résistance (R4) est parallèle à la ligne émettrice de la base du troisième transistor de commutation (T3), résistance (R4) à laquelle sont également reliées l'autre diode Zener (Z2) et, par l'intermédiaire de la résistance (R3) la diode Zener (Z1) supplémentaire.

8. Circuit de stabilisation selon l'une des revendications précédentes 1 à 4, caractérisé par le fait que la base du troisième transistor de commutation (T3) est reliée au conducteur d'alimentation (L) par l'intermédiaire d'une résistance (R3) et que la ligne émettrice de la base du troisième transistor de commutation (T3) constitue la première de valeur ($U_{BE}$).

Fig.1

Fig.2

Fig.3